# EUROPEAN PATENT SPECIFICATION

(11) **EP 2 337 695 B1**
(45) Date of publication and mention of the grant of the patent: **27.07.2016**
(21) Application number: 08807096.6
(22) Date of filing: 17.09.2008
(51) Int. Cl.: B60H 1/00, B60H 1/32

(54) **ELECTRICALLY POWERED TRANSPORT REFRIGERATION UNITS**
ELEKTRISCH ANGETRIEBENE TRANSPORTGEFRIEREINHEITEN
GROUPES FRIGORIFIQUES DE TRANSPORT À COMMANDE ÉLECTRIQUE

(43) Date of publication of application: 29.06.2011
(73) Proprietor: Carrier Corporation, Farmington, CT 06034-4015 (US)
(72) Inventor: CHAKIACHVILI, Bruno, F-27110 Le Neubourg (FR); CHANON, Jean-Pierre, F-01600 Parcieux (FR); BORGES, Bruno, F-01360 Balan (FR)
(74) Representative: Leckey, David Herbert
(86) International application number: PCT/IB2008/002416
(87) International publication number: WO 2010/032074

(56) References cited:
- EP-A- 0 958 952
- EP-A- 1 354 735
- EP-A- 1 512 565

## Description

The present invention relates to refrigerated vehicles, and in particular to refrigerated vehicles comprising an electrically powered refrigeration unit.

### BACKGROUND

When transporting cargo, such as food stuffs, it is common to use trucks and/or vans that have one or more refrigeration compartments (enclosed spaces) in order to preserve the cargo. Such refrigerated trucks and/or vans are accordingly provided with refrigeration systems comprising an evaporator, a condenser and a compressor.

Typically, the compressors in such refrigeration systems have been mechanically driven units which are coupled to the engine of the vehicle, and are accordingly located in the engine bay of the vehicle. As a result, it is required to provide a connection between the compressor and the other components of the refrigeration system to carry refrigerant around the system, which requires often substantial lengths of tubing (refrigerant hoses) to be used.

Furthermore, in refrigeration systems in which the compressor is mechanically driven by the engine of the vehicle, the speed of the compressor is dependent on the speed, e.g. revolutions per minute (rpm), of the engine. Accordingly, it will be appreciated by those skilled in the art that the cooling capacity of the system also varies with the speed of the engine.

The Applicants have monitored and analysed the speed of a refrigerated vehicle's engine, in this case the engine of a light truck, whilst the vehicle is used to undertake deliveries in a typical urban centre (i.e. where the vehicle is stationary for numerous periods of time, including those times when deliveries are being made, due, for example, to the road systems and other traffic on the roads). This analysis has shown that for about 35% of the time, the speed of the vehicle's engine is less than 500 rpm (i.e. is operating at the idle, or minimum operating, speed). At this engine speed, the cooling capacity of the refrigerated system is reduced due to the reduction in the speed of the compressor speed to only about 40-50% of the nominal cooling capacity for the vehicle. Furthermore, the analysis has also shown that for more than 50% of the time, the speed of the vehicle's engine is less than 1500 rpm, at which speed the cooling capacity of the refrigerated system is only about 60-70% of nominal cooling capacity.

The Applicants have therefore recognised that there is a desire for a refrigerated vehicle in which the compressor can to be located in close vicinity to the other components of the system so as to remove the need for a refrigerant connection between the engine bay of the vehicle and the refrigeration system.

Moreover, the Applicants have further recognised that there is a desire for a refrigerated vehicle in which sufficient power can be provided to the compressor to maximise the cooling capacity available at, or near, idle speeds of the vehicle's engine.

Vehicle refrigeration systems are disclosed in EP-A-0958952 A1 and EP-A-1512565.

### SUMMARY OF INVENTION

According to the present invention, there is provided a refrigerated vehicle as set forth in claim 1.

The present invention accordingly provides a refrigerated vehicle having one or more refrigerated compartments. A refrigerated compartment, as known in the art, comprises an insulated enclosure that can be cooled to a desired temperature less than the ambient temperature outside of the vehicle.

The vehicle preferably comprises a refrigerated van or truck (i.e. a vehicle in which the one or more refrigerated compartments are supported on the wheel base of the vehicle). Alternatively, in another preferred embodiment, the vehicle comprises a motorised tractor-trailer combination, wherein the motorised tractor comprises a tractor as known in the art or one of the aforementioned vehicles and the trailer comprises one or more refrigerated compartments.

In a particularly preferred embodiment, the vehicle comprises a light truck, which is defined under European regulations as a vehicle of less than 3.5 tonnes, and which can be driven without requiring a specialised driving licence.

The vehicle of the present invention comprises a refrigeration unit having first and second modules. The first module of the refrigeration unit includes a compressor, a condenser heat exchanger and at least one condenser fan assembly, and is mounted on the exterior of a refrigerated compartment of the vehicle. The second module of the refrigeration unit includes an evaporator heat exchanger and at least one evaporator fan assembly, and is mounted on the interior of a refrigerated compartment of the vehicle. The first arid second modules of the refrigeration unit are therefore always separated, at least, by the insulated wall of a refrigerated compartment.

The first and/or second modules are preferably self-contained units, and thus, in a preferred embodiment, the first and/or second modules each comprise a framework supporting (all of) the components within the module(s) and a casing that is supported by the framework. Preferably, all of the components within the first and/or second modules are contained within the respective casings, with the exception, in some embodiments, of the fan(s) of the at least one condenser and/or evaporator fan assemblies, which may be mounted to the exterior of the respective casings.

It will be understood by those skilled in the art, however, that the first and second modules of the refrigeration unit will at least be in fluid communication such that refrigerant can pass through components of the first module (e.g. the compressor and condenser heat exchanger) and through components of the second module (e.g. the evaporator heat exchanger). Accordingly, tubing or refrigerant hosing preferably extends between the first and second modules placing the components of the refrigeration system in the first module in fluid communication with the components of the refrigeration system in the second module.

The first and second modules of the refrigeration unit may also be electrically connected such that, for example, power supplied to the first module can subsequently be supplied to the second module. In other embodiments, however, the first and second modules may be powered separately from different power supplies.

The first module can be mounted in any suitable and desired location on the exterior of the refrigerated compartment, and by any suitable and desired means. In other words, the first module is preferably mounted on (attached to) an exterior surface of the vehicle. For example, and preferably, the first module is mounted either on the roof of the refrigerated compartment (vehicle) or on the front wall of the refrigerated compartment, e.g. so as to extend over the cabin of the vehicle.

The second module can similarly be mounted in any suitable and desired location within the interior of the refrigerated compartment, and by any suitable and desired means. In other words, the second module is preferably mounted on (attached to) an interior surface of the insulated wall of the refrigerated compartment. Moreover, and as will be appreciated, the second module is preferably mounted at the top of the refrigerated compartment, and so is preferably mounted to the inside surface of the roof of the compartment and/or to the upper portion of the front wall of the compartment.

In a preferred embodiment, the first module is preferably mounted directly adjacent to the second module such that they are separated only by the insulated wall of the refrigerated compartment. Indeed, in this embodiment, the first and second modules are preferably connected together by one or more suitable connectors, such as bolts, that extend through the insulated wall. Accordingly, in this embodiment, the first and second modules can be thought of essentially as forming a single unit comprising two compartments separated by the insulated wall.

In another embodiment, the first and second modules are mounted at separate (non-adjacent) locations on/within the refrigerated compartment. Accordingly, in this embodiment, the first and second modules are split, and form two distinct units.

In a particularly preferred embodiment, the refrigeration unit comprises a plurality of second modules. In one such embodiment, each of the second modules may be mounted at different locations within the interior of the same refrigerated compartment. In other embodiments, and wherein the vehicle comprises a plurality of refrigerated compartments, one or more second modules may be mounted within each of the plurality of compartments. As will be appreciated, this latter embodiment allows each of the plurality of refrigerated compartments of a refrigerated vehicle to be independently cooled by controlling the evaporator heat exchanger and at least one evaporator fan assembly within each of the second modules.

The vehicle of the present invention comprises at least one electrical power supply that is arranged to provide power to the refrigeration unit, and in particular is electrically connected to the drive motor of the compressor. This arrangement, as will be appreciated, means that the speed of the compressor, and thus the cooling capacity of the refrigeration system, is no longer directly dependent on (proportional to) the speed of the vehicle's engine.

The at least one electrical power supply comprises at least one AC electrical power supply for providing AC electrical power to the refrigeration unit.

The at least one AC electrical power supply comprises an alternator or generator assembly that is operatively coupled to the vehicle's engine. In other words, an alternator or generator assembly is operatively coupled to the engine of the vehicle (the vehicle drive), which is in turn electrically connected to the drive motor of the compressor of the refrigeration unit. In this embodiment, the alternator or generator assembly is preferably arranged to supply sufficient power to the drive motor of the compressor such that even at idle speeds of the vehicle engine (e.g. at speeds less than 500 rpm), the cooling capacity of the vehicle is close to its nominal (maximum) value, and in particular is preferably more than 80% of nominal (maximum) cooling capacity. Furthermore, the alternator or generator assembly is preferably further arranged such that the nominal (maximum) cooling capacity of the vehicle can be achieved at engine speeds within the range of about 1200 rpm to 4000 rpm.

In a preferred embodiment in which the at least one AC electrical power supply comprises a generator assembly, the generator assembly preferably comprises a permanent magnet AC generator. The generator assembly preferably further comprises means for regulating the AC voltage produced by generator assembly such that a relatively constant AC voltage is maintained over a range of vehicle engine speeds.

In a preferred embodiment in which the at least one AC electrical power source comprises an alternator, the alternator is preferably capable of generating a power greater than 2 kW.

The at least one electrical power supply preferably further comprises, at least one DC electrical power supply for providing DC electrical power to the refrigeration unit.

In a preferred embodiment, the at least one DC electrical power supply comprises the battery of the vehicle.

The at least one electrical power supply may additionally, comprise one or more electrical power supplies that are independent of the vehicle's engine. For example, the at least one electrical power supply may comprise at least one of: an alternator and/or generator assembly (operatively connected to an engine that is not the vehicle drive); one or more charge storage devices (e.g. one or more batteries); a hybrid power source; and one or more fuel cells.

As will be appreciated by those skilled in the art, refrigerated vehicles typically require both AC and DC power supplies in order to operate the various components of the refrigeration system. For example, AC power is typically required to drive the compressor, whilst DC power is often needed to operate the condenser and evaporator fan assemblies of the first and second modules, respectively.

Thus the first module of the refrigeration unit further comprises a power converter electrically connected to the at least one electrical power supply and arranged to provide electrical power to one or more components of the first module. In this embodiment the compressor drive motor is electrically connected to the at least one power supply through the power converter. In other words, the generator assembly is electrically connected to the power converter, and the power converter in turn is electrically connected to the drive motor of the compressor.

The power converter comprises means, such as one or more AC/AC converter units, for converting AC electrical power (from an AC power supply) into AC power at one or more different voltages and/or frequencies. This allows, for example, the voltage and/or frequency of the AC power being supplied to the compressor to be adjusted to a predetermined value based, for example, on the cooling demand and/or the status of the refrigeration system.

The power converter preferably further comprises, means, such as one or more AC/DC rectifier units, for converting AC electrical power (from an AC power supply) into DC electrical power at one or more different voltages. Therefore, for example, DC power at a first voltage may be used to power one or more heaters that are preferably used to defrost sections (components) of the vehicle refrigeration system, whilst DC power at a second voltage may be used to power one or more fan assemblies such as: the at least one condenser fan assembly in the first module; the at least one evaporator fan assembly in the second module; and/or one or more fans that are arranged to cool the power converter.

The power converter preferably further comprises, means, such as one or more DC/DC converter units, for converting DC electrical power (from a DC power supply) into DC power at one or more different voltages. This DC power may be used in addition to, or instead of, the DC power from the means for converting AC electrical power (from an AC power supply) into DC electrical power at one or more different voltages, and can be similarly used to provide power to, for example, one or more heaters and/or one or more fan assemblies.

The temperature of the power converter is preferably controlled (cooled) using one or more heat sink assemblies associated with the power converter and/or using one or more fans arranged in the first module,

In a preferred embodiment, the refrigeration unit, and preferably the first module, comprises control means, such as a microcontroller, for controlling and/or monitoring the operation of one or more components within the refrigeration unit. For example, the control means preferably controls the speed and actuation of the at least one condenser fan assembly in the first module and the at least one evaporator fan assembly in the second modules. The control means, therefore, preferably receives information relating to the pressure (at the suction port and/or the discharge port) and/or temperature of the compressor. The control means also preferably receives information relating to the temperature of the refrigerated compartment(s), and accordingly is preferably in communication with one or more temperature sensors in the refrigerated compartment(s).

In a preferred embodiment, the control means receives power from a power source that is independent of the vehicle's engine (the vehicle drive), e.g. the vehicle's battery, such that the control means is supplied with power when the vehicle's engine is not in operation.

The compressor of the present invention can be of any suitable and desired type, and may, for example, comprise a rotary compressor or a scroll compressor. The compressor may also comprise a fixed speed compressor, but is preferably a variable speed compressor.

In a preferred embodiment, the compressor is a horizontal compressor, and is preferably arranged so as to be substantially parallel to the base of the first module. This allows the profile of the first module to be reduced, or, in other words, for the size of the first module to be minimised.

The condenser and/or evaporator fan assemblies of the present invention can also be of any suitable and desired type, and may, for example, comprise axial or centrifugal fan assemblies.

As is known in the art, it is usual for refrigerated vehicles to be operable in at least two modes of operation. In one mode of operation, the refrigeration system of the vehicle is powered only by sources of power within the vehicle itself, e.g. a generator assembly operatively connected to the vehicle's engine and/or the vehicle's battery. This is the mode of operation used, for example, when the refrigerated vehicle is making deliveries, and is thus commonly referred to as a "road mode". In a second mode of operation, the refrigeration system of the vehicle is powered only, or at least primarily, by sources of power external to the vehicle, e.g. commercial AC mains power. This is the mode of operation used, for example, when the engine of the refrigerated vehicle is not running, and is commonly referred to as a "standby mode".

As described above, in conventional refrigerated vehicles, the compressor of the refrigeration system is commonly mechanically driven by the vehicle's engine. Therefore, whilst this compressor is used when the vehicle is operating in a road mode, it is not possible to use the compressor when the vehicle is operating in a standby mode. Accordingly, an additional compressor is usually provided that is connectable to an electrical power source external to the vehicle, and which can be used instead of the compressor driven by the vehicle's engine when the vehicle is in a standby mode.

In the refrigerated vehicle of the present invention, however, the compressor is electrically powered rather than mechanically driven, and can therefore be used both when the vehicle is in a road mode and when the vehicle is in a standby mode.

Accordingly, in a preferred embodiment, the motor of the compressor in the first module is connected to at least one electrical power supply on the vehicle and is further connectable to at least one external electrical power supply. In other words, in a first mode of operation (road mode), the compressor drive motor receives power only from one or more electrical power supplies on the vehicle, and in a second mode of operation (standby mode), the compressor drive motor receives power from one or more electrical power supplies external to vehicle (i.e. that are not mounted to the vehicle).

Furthermore the power converter is preferably connectable to one or more electrical power supplies (AC and/or DC) external to vehicle such that power from such sources can be supplied to the compressor drive motor through the power converter.

### DETAILED DESCRIPTION

A preferred embodiment of the present invention will now be described by way of example only with reference to the accompanying drawings, in which:
Figure 1 shows four exemplary refrigerated vehicles that are in accordance with the present invention;
Figure 2 shows the various components within an exemplary first module of the refrigeration unit;
Figure 3 shows the first module of Figure 2 covered by a casing;
Figure 4 shows the various components within an exemplary second module of the refrigeration unit;
Figure 5 shows the first and second modules of the refrigeration unit arranged in a "monoblock" configuration;
Figure 6 shows a schematic of a refrigerated vehicle in accordance with the present invention, and shows the mass, energy and information flow between the various components of the vehicle; and
Figure 7 shows the schematic of Figure 6 indicating the components that are contained within the first and second modules of the refrigeration unit in a preferred embodiment.

Like reference numerals are used for like components in the Figures unless otherwise indicated.

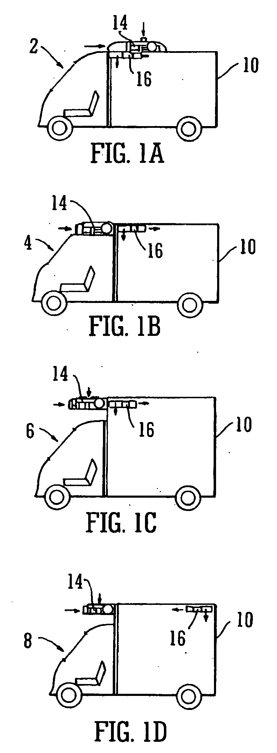

Figure 1 shows four exemplary refrigerated vehicles that are in accordance with the present invention. Each vehicle 2, 4, 6, 8 has at least one refrigerated compartment 10 that is maintained at a desired temperature by a refrigeration unit. The refrigeration unit is formed from two modules, a first module 14 mounted on the exterior of the compartment 10 and a second module 16 mounted within the interior of the compartment 10. The first module 14, which is also referred to as the condenser sub-assembly, as discussed in below detail, comprises the condenser and compressor of the refrigeration system. The second module 16, meanwhile, which is also referred to as the evaporator sub-assembly, comprises the evaporator of the refrigeration system.

Figure 1a shows a refrigerated vehicle 2 in which the refrigeration unit is in a "roof top" arrangement. In this arrangement, the condenser sub-assembly 14 is mounted on the roof of the vehicle 2, and the evaporator sub-assembly 16 is mounted underneath the condensing sub-assembly 14 to the underside of the top of the refrigerated compartment 10.

Figure 1b shows a refrigerated vehicle 4 in which the refrigeration unit is in a "recessed" arrangement. In this arrangement, the condenser sub-assembly 14 is mounted within a recessed area provided in the roof of the vehicle, and the evaporator sub-assembly 16 is mounted adjacent to the condenser sub-assembly 14 to the underside of the top of the refrigerated compartment 10.

Figure 1c shows a refrigerated vehicle 6 in which the refrigeration unit is in a "monoblock" arrangement. In this arrangement, the condenser sub-assembly is mounted to the front wall of the refrigerated compartment 10 above the cabin of the vehicle, and the evaporator sub-assembly 16 is connected to the condenser sub-assembly 14 through the insulated wall of the compartment 10 so as to effectively form a single unit.

Figure 1d shows a refrigerated vehicle 8 in which the refrigeration unit is in a "split" arrangement. In this arrangement, as with the "monoblock" arrangement shown in Figure 1c, the condenser sub-assembly 14 is mounted to the front wall of the refrigerated compartment 10. The evaporator sub-assembly 16, however, is mounted at the rear of the compartment.

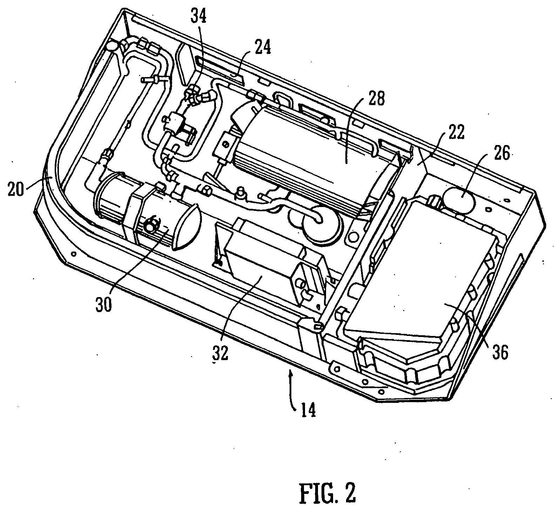

The condenser sub-assembly 14 of the present embodiment is shown in detail in Figure 2.

As can be seen, the condenser sub-assembly 14 comprises an outer framework 20 that can be mounted to the exterior of the compartment 10, for example, by using bolts, and which provides support for the components within the module. An internal panel 22, which is attached to the framework 20, and provides additional support for the components within the module, divides the sub-assembly 14 into two separate compartments 24 and 26.

Within the first compartment 24 is a compressor 28, a condenser 30 and a microcontroller 32. Tubing 34 for carrying refrigerant is also contained in the first compartment 24, and which places the compressor 28 in fluid communication with the condenser 30, and which in turn places these components in fluid communication with those in the evaporator sub-assembly 16.

Within the second compartment 26 is a power converter 36, which, as described in more detail below, is connected to one or more electrical power supplies within the vehicle (both AC and DC), and is used to convert the supplied electrical power to particular frequencies and voltages in the case of AC power, and to particular voltages in the case of DC. One or more fan assemblies or heat sinks (not shown) are also provided in the second compartment 26 to maintain the power converter at a desired, reduced temperature (or in other words to cool the power converter 36).

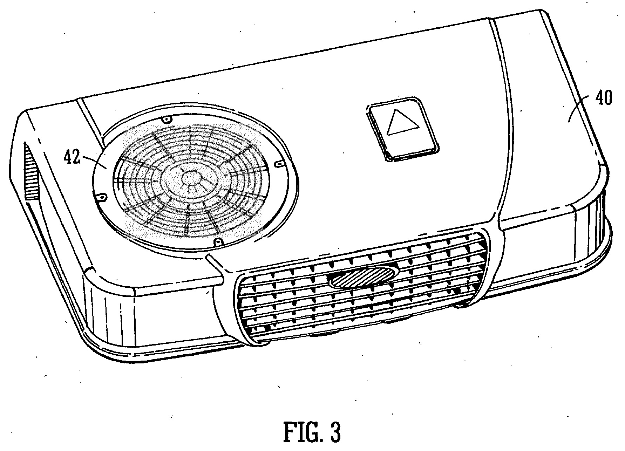

Figure 3 shows the condenser sub-assembly 14 of Figure 2 that has been covered by a casing 40, which is attached to the framework 20. A condenser fan 42 is mounted to the casing 40 (and extends into the first compartment 24) to provide a flow of outside air over the condenser 30.

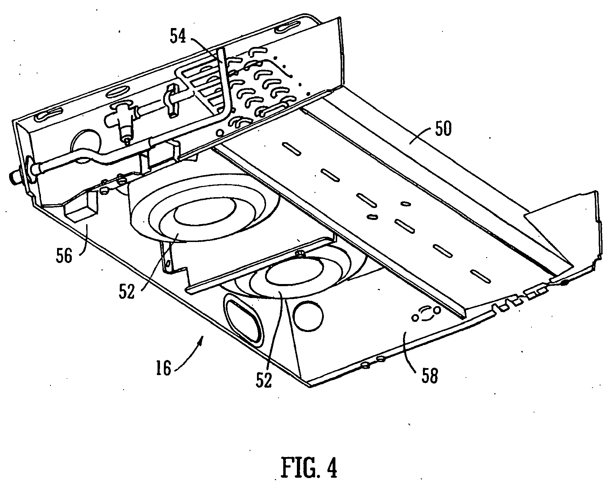

The evaporator sub-assembly 16 of the present embodiment is shown in detail in Figure 4.

As can be seen, the evaporator sub-assembly 16 comprises an outer framework 58 that can be mounted to the interior of the compartment 10, for example, by using bolts, and which provides support for the components within the module. The evaporator sub-assembly 16 comprises an evaporator 50, and two evaporator fans 52 for providing a flow of air over the evaporator 50. (Although two evaporator fans 50 are shown in the embodiment of Figure 4, the evaporator sub-assembly 16 may include any number of fans 50 as desired.) Tubing 54 is also provided in the evaporator sub-assembly 16 for carrying refrigerant to the evaporator, and which is connected (directly or indirectly) to the tubing 34 in the condenser sub-assembly 14.

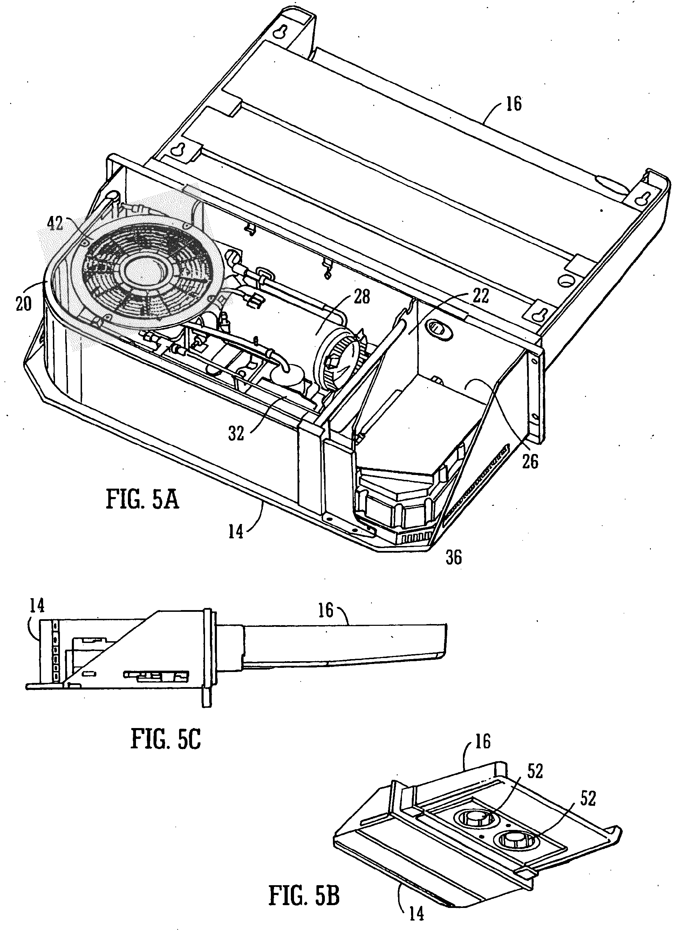

Figure 5 shows the condenser sub-assembly 14 and evaporator sub-assembly 16 arranged in the "monoblock" configuration of the refrigerated vehicle of Figure 1c.

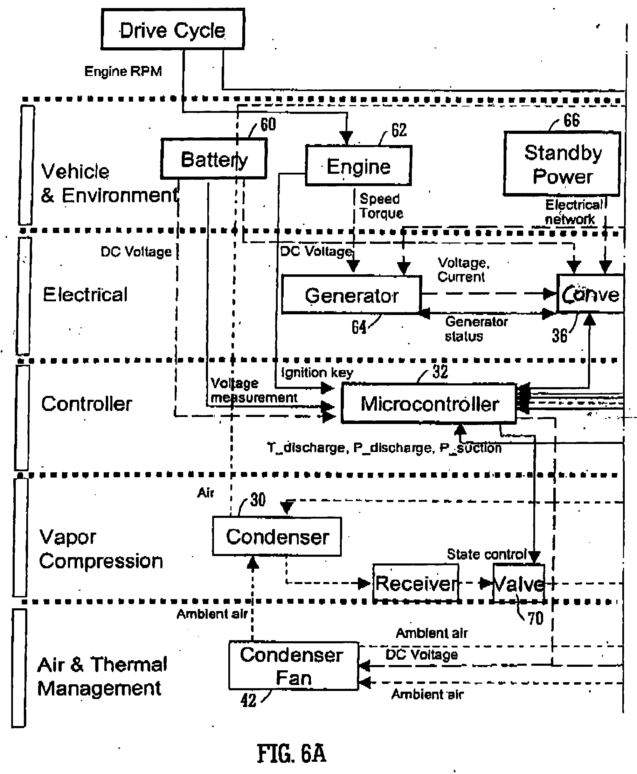

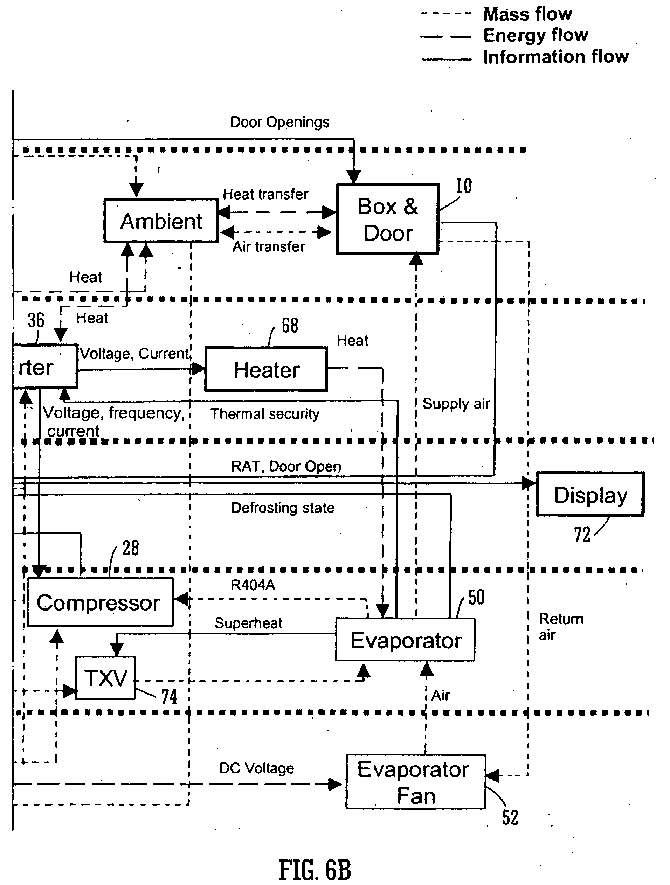

A schematic of the present embodiment is illustrated in Figure 6, and which shows the mass, energy and information flow between the various components of the refrigerated vehicle.

The vehicle of the present embodiment is designed to operate in two different modes of operation: a "road mode" in which all of the components of the refrigeration unit, and in particular the compressor, are electrically powered by power sources within the vehicle itself; and a "standby mode" in which the vehicle engine is not running, and the compressor, at least, is electrically powered by a source of commercial AC mains power.

When the vehicle is operating in road mode, and with reference to Figure 6, the battery 60 of the vehicle is used as a (low voltage) DC power source, whilst an AC generator 64 that is driven by the engine 62 of the vehicle is used as an AC power source. The generator typically provides power in a range of from 150 to 400 VAC.

The power that is generated by the generator 64 is supplied, via any suitable means, to the power convertor 36 (within the condenser sub-assembly 14).

The power converter 36 comprises one or more AC/AC converter units that can convert the power supplied from the generator 64 into AC power at a desired voltage and frequency, e.g. from between 50 to 450 VAC, and at a frequency of between 10 Hz to 120 Hz, for use in powering the compressor 28.

The power converter 36 also comprises one or more AC/DC rectifier units that can convert the power supplied from the generator 64 into high voltage DC power, e.g. at a voltage of 200V to 600 VDC. This high voltage DC power can be used to power one or more heaters 68, which, for example, are used to defrost parts of the refrigeration (vapour compression) system.

The power converter 36 may also comprise one or more AC/DC rectifier units that can convert the power supplied from the generator 64 into low voltage DC power, e.g. at a voltage of 12 to 24 VDC. This low voltage DC power can be used to drive one or more fans, which, for example, are provided to cool the power converter are described above.

Low voltage DC power from the battery 60 is also supplied to the power converter 36, again by any suitable means, and the power converter 36 accordingly comprises one or more DC/DC converter units that can convert the power supplied from the battery 60 to a desired voltage. In some embodiments, this low voltage DC power can be used instead of that provided from the generator 64, or of course vice versa, whilst in other embodiments both low voltage DC sources are provided.

The low voltage DC power from the battery 60 is used, in the present embodiment, to power the microcontroller 32 in the condenser sub-assembly 14. This means that power is always available for the microcontroller 32 including, for example, when the vehicle is changed from road mode operation to standby mode operation, (i.e. when the source of AC power is changed from the engine-driven generator 64 to mains power 66 as described below).

The low voltage DC power from the battery 60 is also used to provide power to the condenser and evaporator fans 42 and 52.

The microcontroller 32 is used to control the operation of the condenser and evaporator fans 42, 52, and also to provide control, monitoring and supervisory functions for components of the refrigeration system, such as valve 70.

A display 72 is associated with the refrigeration system, and is provided, for example, in the vehicle cab. The display 72 is in two-way communication with the microcontroller 32 so as to both display information relating to the status of the refrigeration system to the user (e.g. driver of the vehicle), and also to allow the user to modify the operation of the refrigeration system (via the microcontroller 32) as desired.

When the vehicle is operating in standby mode, i.e. when the engine 62 is turned off, AC power is supplied to the refrigeration unit, and to the power converter 36 in particular, from a source of standby power 66 such as mains AC (instead of from the generator 64). The AC power from the source 66 is typically in the range of 200 to 500 VAC, and can be converted in a similar manner to that of the power from the generator 64 to AC power at a voltage and frequency suitable for powering the compressor 28 and to low and/or high voltage DC power as required.

In both modes of operation, i.e. in both road mode and standby mode, the refrigeration (vapour compression) system of the present embodiment operates, as is known in the art, by compressing a refrigerant in the system in the compressor 28. The refrigerant is then passed to the condenser 30, wherein a condenser fan 42 draws outside air over the condenser 34 so as to remove heat from the refrigerant. The refrigerant is next passed through an expansion valve 74, and is then passed to the evaporator 50, wherein air is drawn over the evaporator 50 by evaporator fan 52 to cool the refrigerated compartment 10. The refrigerant is then returned to the compressor 28 to start the cycle again.

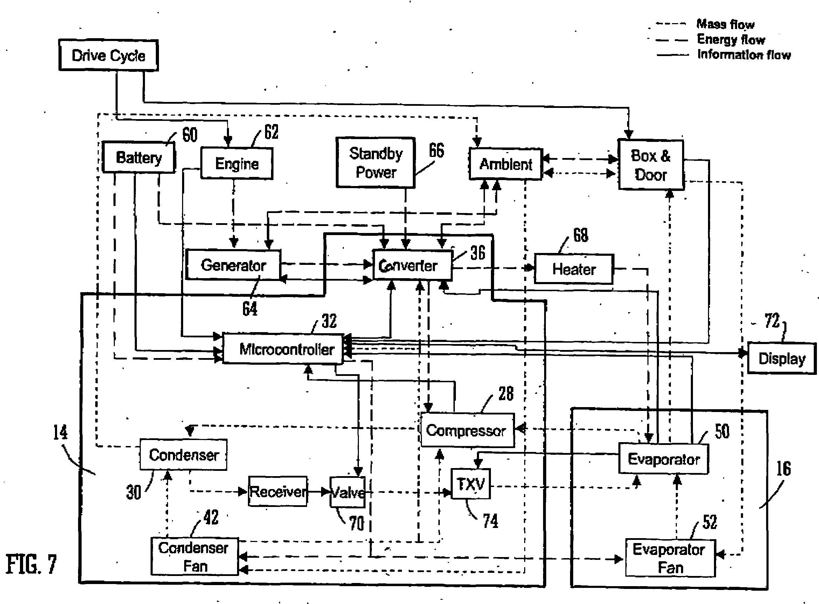

Figure 7 shows the schematic of Figure 6, but indicates the components of the refrigerated vehicle of the present embodiment that are contained within the condenser and evaporator sub-assemblies 14 and 16. As can be seen, therefore, condenser sub-assembly 14 comprises all the components of the refrigeration (vapour compression) system except for the evaporator 50, the microcontroller 32, the power converter 36 and the condenser fan 42. The evaporator sub-assembly 16, meanwhile, comprises the evaporator 50 and the evaporator fan 52.

It will be understood that the above description is by way of example only and that other arrangements will fall within the scope of the invention as defined by the accompanying claims,

## Claims

1. A refrigerated vehicle (2;4;6;8) having at least one refrigerated compartment (10), comprising:
at least one electrical power supply; and
a refrigeration unit having:
a first module (14) mounted on the exterior of a refrigerated compartment (10), the first module (14) comprising:
a compressor (28) having a discharge port and a suction port and further having a motor hermetically disposed therein for running the compressor (26), the motor being electrically connected to the at least one electrical power supply;
a condenser heat exchanger (30) operatively coupled to the compressor discharge port; and
at least one condenser fan assembly (32) having at least one electric fan motor configured to provide air flow over the condenser heat exchanger (30); and
a second module (16) mounted on the interior of a refrigerated compartment (10), the second module comprising:
an evaporator heat exchanger (50) operatively coupled to the compressor suction port; and
at least one evaporator fan assembly (52) having at least one electric motor configured to provide air flow over the evaporator heat exchanger (50); the at least one electrical power supply comprising at least one AC electrical power supply for providing AC electrical power to the refrigeration unit, the at least one AC electrical power supply comprising an alternator or generator assembly (64) that is operatively coupled to the engine (62) of the vehicle;
**characterised in that**:
the first module (14) of the refrigeration unit comprises a power converter (36) comprising means for converting AC electrical power into AC power at one or more different voltages and/or frequencies electrically connected to the alternator or generator assembly (64) and arranged to provide electrical power to the motor of the compressor (28)..

2. The refrigerated vehicle of claim 1, wherein the first module is mounted on an exterior surface of the vehicle.

3. The refrigerated vehicle of claim 1 or 2, wherein the second module is mounted on an interior surface of an insulated wall of the refrigerated compartment.

4. The refrigerated vehicle of any preceding claim, wherein the first module and/or the second module comprises a framework supporting the components within the module and a casing that is supported by the framework.

5. The refrigerated vehicle of any preceding claim, wherein the at least one electrical power supply further comprises at least one DC electrical power supply (60) for providing DC electrical power to the refrigeration unit.

6. The refrigerated vehicle of claim 5, wherein the at least one DC electrical power supply comprises the battery (60) of the vehicle.

7. The refrigerated vehicle of any preceding claim, wherein the at least one electrical power supply further comprises at least one of: one or more charge storage devices; a hybrid power source; and one or more fuel cells.

8. The refrigerated vehicle of any preceding claim, wherein the power converter (36) further comprises means for converting AC electrical power into DC power at one or more different voltages.

9. The refrigerated vehicle of any preceding claim, wherein the power converter (36) further comprises means for converting DC electrical power into DC power at one or more different voltages.

10. The refrigerated vehicle of any preceding claim, wherein the first module (14) further comprises control means (32) for controlling and/or monitoring the operation of one or more components of the refrigeration unit.

11. The refrigerated vehicle of any preceding claim, wherein the compressor (28) comprises a horizontal, variable speed compressor.

12. The refrigerated vehicle of any preceding claim, wherein the compressor motor is connectable to at least one electrical power supply external to the vehicle.

## Patentansprüche

1. Kühlfahrzeug (2; 4; 6; 8), das wenigstens ein Kühlfach (10) aufweist, umfassend:
wenigstens eine elektrische Stromversorgung; und
eine Kühleinheit, aufweisend:
ein erstes Modul (14), das auf der Außenseite eines Kühlfachs (10) montiert ist, das erste Modul (14) umfassend:
einen Kompressor (28), der einen Auslassanschluss und einen Sauganschluss aufweist und ferner einen Motor aufweist, der luftdicht darin angeordnet ist, um den Kompressor (28) zu betreiben, wobei der Motor elektrisch mit der wenigstens einen elektrischen Stromversorgung verbunden ist;
einen Kondensatorwärmetauscher (30), der mit dem Kompressorauslassanschluss in Wirkverbindung steht; und
wenigstens eine Kondensatorlüfterbaugruppe (32), die wenigstens einen elektrischen Lüftermotor aufweist, der konfiguriert ist, um Luftstrom über den Kondensatorwärmetauscher (30) bereitzustellen; und
ein zweites Modul (16), das auf der Innenseite des Kühlfachs (10) montiert ist, das zweite Modul umfassend:
einen Verdampferwärmetauscher (50), der mit dem Kompressorsauganschluss in Wirkverbindung steht; und
wenigstens eine Verdampferlüfterbaugruppe (52), die wenigstens einen elektrischen Motor aufweist, der konfiguriert ist, um Luftstrom über den Verdampferwärmetauscher (50) bereitzustellen; wobei die wenigstens eine elektrische Stromversorgung wenigstens eins umfasst von einer elektrischen Wechselstromversorgung, um elektrischen Wechselstrom an die Kühleinheit bereitzustellen, wobei die wenigstens eine elektrische Wechselstromversorgung eine Wechselstromerzeuger- oder eine Generatorbaugruppe (64) umfasst, die mit dem Motor (62) des Fahrzeugs in Wirkverbindung steht;
**dadurch gekennzeichnet, dass**:
das erste Modul (14) der Kühleinheit einen Stromrichter (36) umfasst, der Mittel zum Umwandeln von elektrischem Wechselstrom in Wechselstrom mit einer oder mehreren verschiedenen Spannungen und/oder Frequenzen umfasst, die elektrische mit der Wechselstromerzeuger- oder Generatorbaugruppe (64) verbunden sind und angeordnet sind, um elektrischen Strom an den Motor des Kompressors (28) bereitzustellen.

2. Kühlfahrzeug nach Anspruch 1, wobei das erste Modul auf einer Außenfläche des Fahrzeugs montiert ist.

3. Kühlfahrzeug nach Anspruch 1 oder 2, wobei das zweite Modul auf einer Innenfläche einer isolierten Wand des Kühlfachs montiert ist.

4. Kühlfahrzeug nach einem der vorangehenden Ansprüche, wobei das erste Modul und/oder das zweite Modul einen Rahmen, der die Komponenten im Modul stützt, und ein Gehäuse, das durch den Rahmen gestützt wird, umfasst.

5. Kühlfahrzeug nach einem der vorangehenden Ansprüche, wobei die wenigstens eine elektrische Stromversorgung ferner wenigstens eine elektrische Gleichstromversorgung (60) zum Bereitstellen von elektrischem Gleichstrom an die Kühleinheit umfasst.

6. Kühlfahrzeug nach Anspruch 5, wobei die wenigstens eine elektrische Gleichstromversorgung die Batterie (60) des Fahrzeugs umfasst.

7. Kühlfahrzeug nach einem der vorangehenden Ansprüche, wobei die wenigstens eine elektrische Stromversorgung ferner wenigstens eins umfasst von: einer oder mehreren Ladungsspeichervorrichtungen; einer Hybridstromversorgung; und einer oder mehreren Brennstoffzellen.

8. Kühlfahrzeug nach einem der vorangehenden Ansprüche, wobei der Stromrichter (36) ferner Mittel zum Umwandeln von elektrischem Wechselstrom in Gleichstrom mit einer oder mehreren verschiedenen Spannungen umfasst.

9. Kühlfahrzeug nach einem der vorangehenden Ansprüche, wobei der Stromrichter (36) ferner Mittel zum Umwandeln von elektrischem Gleichstrom in Gleichstrom mit einer oder mehreren verschiedenen Spannungen umfasst.

10. Kühlfahrzeug nach einem der vorangehenden Ansprüche, wobei das erste Modul (14) ferner Steuerungsmittel (32) zum Steuern und/oder Überwachen des Betriebs einer oder mehrerer Komponenten der Kühleinheit umfasst.

11. Kühlfahrzeug nach einem der vorangehenden Ansprüche, wobei der Kompressor (28) einen horizontalen Kompressor mit variabler Drehzahl umfasst.

12. Kühlfahrzeug nach einem der vorangehenden Ansprüche, wobei der Kompressormotor mit wenigstens einer elektrischen Stromversorgung außerhalb des Fahrzeugs verbunden werden kann.

## Revendications

1. Véhicule réfrigéré (2 ; 4 ; 6 ; 8) ayant au moins un compartiment réfrigéré (10), comprenant :
au moins une alimentation électrique ; et
une unité de réfrigération ayant :
un premier module (14) monté sur l'extérieur d'un compartiment réfrigéré (10), le premier module (14) comprenant :
un compresseur (28) ayant un orifice de décharge et un orifice d'aspiration et ayant en outre un moteur hermétiquement disposé dans celui-ci pour faire fonctionner le compresseur (28), le moteur étant électriquement relié à l'au moins une alimentation électrique ;
un échangeur de chaleur à condensation (30) couplé fonctionnellement à l'orifice de décharge de compresseur ; et
au moins un bloc ventilateur de condenseur (32) ayant au moins un moteur de ventilateur électrique configuré pour fournir un flux d'air sur l'échangeur de chaleur à condensation (30) ; et
un deuxième module (16) monté sur l'intérieur d'un compartiment réfrigéré (10), le deuxième module comprenant :
un échangeur de chaleur à évaporation (50) couplé fonctionnellement à l'orifice d'aspiration de compresseur ; et
au moins un bloc ventilateur d'évaporateur (52) ayant au moins un moteur électrique configuré pour fournir un flux d'air sur l'échangeur de chaleur à évaporation (50) ;
l'au moins une alimentation électrique comprenant au moins une alimentation électrique CA pour fournir de l'énergie électrique CA à l'unité de réfrigération, l'au moins une alimentation électrique CA comprenant un ensemble alternateur ou générateur (64) qui est couplé fonctionnellement au moteur (62) du véhicule ;
**caractérisé en ce que** :
le premier module (14) de l'unité de réfrigération comprend un convertisseur de puissance (36) comprenant des moyens de conversion de l'énergie électrique CA en courant CA à une ou plusieurs tensions et/ou fréquences différentes électriquement relié à l'ensemble alternateur ou générateur (64) et conçu pour fournir de l'énergie électrique au moteur du compresseur (28).

2. Véhicule réfrigéré selon la revendication 1, dans lequel le premier module est monté sur une surface extérieure du véhicule.

3. Véhicule réfrigéré selon la revendication 1 ou 2, dans lequel le deuxième module est monté sur une surface intérieure d'une paroi isolée du compartiment réfrigéré.

4. Véhicule réfrigéré selon une quelconque revendication précédente, dans lequel le premier module et/ou le deuxième module comprend un châssis supportant les composants à l'intérieur du module et un boîtier qui est supporté par le châssis.

5. Véhicule réfrigéré selon une quelconque revendication précédente, dans lequel l'au moins une alimentation électrique comprend en outre au moins une alimentation électrique CC (60) pour fournir de l'énergie électrique CC à l'unité de réfrigération.

6. Véhicule réfrigéré selon la revendication 5, dans lequel l'au moins une alimentation électrique CC comprend la batterie (60) du véhicule.

7. Véhicule réfrigéré selon une quelconque revendication précédente, dans lequel l'au moins une alimentation électrique comprend en outre au moins un parmi : un ou plusieurs dispositifs de stockage de charge ; une source d'alimentation hybride ; et une ou plusieurs piles à combustible.

8. Véhicule réfrigéré selon une quelconque revendication précédente, dans lequel le convertisseur de puissance (36) comprend en outre des moyens de conversion de l'énergie électrique CA en courant CC à une ou plusieurs tensions différentes.

9. Véhicule réfrigéré selon une quelconque revendication précédente, dans lequel le convertisseur de puissance (36) comprend en outre des moyens de conversion de l'énergie électrique CC en courant CC à une ou plusieurs tensions différentes.

10. Véhicule réfrigéré selon une quelconque revendication précédente, dans lequel le premier module (14) comprend en outre des moyens de commande (32) pour commander et/ou surveiller le fonctionnement d'un ou plusieurs composants de l'unité de réfrigération.

11. Véhicule réfrigéré selon une quelconque revendication précédente, dans lequel le compresseur (28) comprend un compresseur à vitesse variable, horizontale.

12. Véhicule réfrigéré selon une quelconque revendication précédente, dans lequel le moteur de compresseur peut être relié à au moins une alimentation électrique externe au véhicule.
